# EUROPEAN PATENT APPLICATION

(11) **EP 2 067 649 A2**
(43) Date of publication of application: **10.06.2009**
(21) Application number: 08019944.1
(22) Date of filing: 14.11.2008
(51) Int. Cl.: B60L 15/20, B60L 11/08, B60L 11/12, H02P 27/06, H02P 27/16, B60L 7/14, B60L 7/16

(54) **Hybrid electric vehicle and control method therefor**

(30) Priority: 03.12.2007 JP 2007312519
(71) Applicant: Mazda Motor Corporation, Fuchu-cho Aki-gun Hiroshima 730-8670 (JP)
(72) Inventor: Nobuhide, Seo, Aki-gun Hiroshima 730-8670 (JP); Kei, Yonemori, Aki-gun Hiroshima 730-8670 (JP)
(74) Representative: Müller-Boré & Partner Patentanwälte

(57) **Abstract**

A hybrid electric vehicle and method for controlling a hybrid electric vehicle are disclosed. The method may include determining a vehicle operating condition of a hybrid electric vehicle, determining at least a phase of a primary alternating current, determining at least a phase of a driving current to be supplied to a motor of the hybrid electric vehicle on the basis of said operating condition, determining whether or not a phase of said primary alternating current is substantially the same as a phase of a driving current, and supplying at least part of said primary alternating current from a generator to the motor via a second feed circuit when the phase of said primary alternating current is substantially the same as the phase of said driving current.

## Description

### TECHNICAL FIELD

The present description relates to hybrid electric vehicles and control methods therefor. More particularly, this description relates to series hybrid electric vehicles and control methods therefor.

### BACKGROUND AND SUMMARY

The term series hybrid electric vehicle designates a vehicle configured to drive an electric generator by an internal combustion engine (engine), to supply electric power from the electric generator to a motor, and to drive drive-wheels by the motor, as disclosed in JP1999220806A, as an example.

Because a waveform of a primary alternating current generated by a generator differs from a waveform of current that should be provided to a motor, a convertor and an inverter are connected in series between a generator and a motor in the technology described in the reference above. In this way, the primary alternating current can be converted into a direct current first, and then an inverter can convert the direct current into a secondary alternating current and supply the secondary alternating current to a motor.

However, the inventors have found a problem in the technology described in the reference above. Specifically, in the reference, a current to be supplied to a motor is converted by a convertor and an inverter at all times, which causes not insubstantial current loss due to two converting operations, thereby increasing power consumption from a power supply. In this way, the approach used in the reference above may reduce efficiency of a hybrid electric vehicle.
Accordingly, a problem underlying the present invention is to improve efficiency of a hybrid electric vehicle.
This problem is solved by a method and vehicle having the features disclosed in the independent claims. Further developments of the invention are the subject of the dependent claims.

Some embodiments of the present disclosure provide a method for controlling a hybrid electric vehicle or a hybrid electric vehicle to improve efficiency of the hybrid electric vehicle, which can utilize a current generated by a generator.
The problem underlying the present invention is solved by a method for controlling a hybrid electric vehicle having a generator driven by an engine to generate primary alternating current, a motor configured to provide a drive force to propel the vehicle, a first feed circuit to convert said primary alternating current into direct current and reconvert said direct current into secondary alternating current and then supply said secondary alternating current to said motor, and a second feed circuit which is provided in parallel with said first feed circuit, the method comprising the steps of:
determining a vehicle operating condition;
determining at least a phase of said primary alternating current;
determining at least a phase of a driving current to be supplied to said motor on the basis of said vehicle operating condition;
determining whether a phase of said primary alternating current is substantially the same as a phase of said driving current or not; and
supplying at least part of said primary alternating current from said generator to said motor via said second feed circuit when the phase of said primary alternating current is substantially the same as the phase of said driving current.
Preferably, the second feed circuit can conduct said primary alternating current to said motor directly and/or is able to modify a waveform of said primary alternating current.

One embodiment of the present description includes a method for controlling a hybrid electric vehicle having a generator driven by an engine to generate primary alternating current, a motor configured to provide a drive force to propel the vehicle, a first feed circuit to convert said primary alternating current into direct current and reconvert said direct current into secondary alternating current and then supply said secondary alternating current to said motor, and a second feed circuit which is provided in parallel with said first feed circuit such that the second feed circuit can conduct said primary alternating current to said motor directly and is able to modify a waveform of said primary alternating current, the method comprising the steps of: determining vehicle operating condition; determining at least a phase of said primary alternating current; determining at least a phase of a driving current to be supplied to said motor on the basis of said operating condition; determining whether a phase of said primary alternating current is substantially the same as a phase of said driving current or not; and supplying at least part of said primary alternating current from said generator to said motor via said second feed circuit when the phase of said primary alternating current is substantially the same as the phase of said driving current.

Each of the above described methods can solve at least some of the issues of the reference described above. Specifically, because a primary current is supplied to a motor via the second feed circuit when the phase of said primary alternating current is substantially the same as the phase of said driving current, the motor can be driven by the generator while reducing the current loss due to current conversion, and the motor can thus propel a vehicle with reduced energy loss.

In an example preferable embodiment, this method supplies all of said primary alternating current from said generator to said motor via said second feed circuit when the phase of said primary alternating current is substantially the same as the phase of said driving current.

This example embodiment can enhance an operating rate of the second feed circuit and drive a motor by alternating current from a generator with a further decrease in conversion loss, thereby propelling a vehicle with an even greater reduction in energy loss.

In another example preferable embodiment, the method further comprises the steps of: determining a differential value which is calculated by subtracting an absolute value of an amplitude of said driving current from an absolute value of an amplitude of said primary alternating current; and/or conducting a part of said primary alternating current to a power supply when the phase of said primary alternating current is substantially the same as the phase of said driving current and said differential value is greater than zero; and/or compensating for a shortfall of current from said power supply when the phase of said primary alternating current is substantially the same as the phase of said driving current and said differential value is less than zero.

In this example embodiment, when a primary current generated by a generator is larger than a driving current, a power supply is charged by conducting surplus current to the power supply and the surplus current can be regenerated efficiently. On the contrary, when a primary current generated by a generator is less than a driving current, optimum driving current can be ensured by supplying shortfall of current from the power supply. Also, when there is surplus current, it may be stored in the power supply, and then stored current will be supplied to a motor only when a differential value becomes a negative value, which makes it possible to attempt to save current from the power supply.
The problem underlying the present invention is further solved by a hybrid electric vehicle having an internal combustion engine, a generator driven by said engine to generate a primary alternating current, a motor configured to provide a drive force to propel the vehicle, a first feed circuit to convert said primary alternating current into a direct current and reconvert said direct current into a secondary alternating current and then supply said secondary alternating current to said motor, a second feed circuit which is provided parallel with said first feed circuit, and a control system for controlling power distribution of each feed circuit, said control system comprising:
an operating condition determining module for determining a vehicle operating condition;
a primary current phase determining module for determining at least a phase of said primary alternating current;
a driving current determining module for determining at least a phase of a driving current to be supplied to said motor on the basis of said vehicle operating condition; and
a power feeding control module for supplying at least part of said primary alternating current from said generator to said motor via said second feed circuit when the phase of said primary alternating current is substantially the same as the phase of said driving current.
Preferably, the second feed circuit is configured to conduct said primary alternating current to said motor directly and/or to modify a waveform of said primary alternating current via a semiconducting switch provided in said second feed circuit.

In another embodiment, a hybrid electric vehicle having an internal combustion engine, a generator driven by said engine to generate primary alternating current, a motor configured to provide a drive force to propel the vehicle, a first feed circuit to convert said primary alternating current into direct current and reconvert said direct current into secondary alternating current and then supply said secondary alternating current to said motor, a second feed circuit which is provided in parallel with said first feed circuit such that the second feed circuit can conduct said primary alternating current to said motor directly and is able to modify a waveform of said primary alternating current, a semiconducting switch provided in said second feed circuit, and a control system for controlling power distribution of each feed circuit is provided. The control system comprises: an operating condition determining module for determining vehicle operating condition; a primary current phase determining module for determining at least a phase of said primary alternating current; a driving current determining module for determining at least a phase of a driving current to be supplied to said motor on the basis of said vehicle operating condition; and a power feeding control module for having at least part of said primary alternating current modified by said semiconducting switch such that at least part of said primary alternating current is supplied from said generator to said motor via said second feed circuit when the phase of said primary alternating current substantially is the same as the phase of said driving current.

This hybrid electric vehicle can solve at least some of the issues of the related reference described above.

In an example preferable embodiment, said power feeding control module supplies all of said primary alternating current from said generator to said motor via said second feed circuit when the phase of said primary alternating current is substantially the same as the phase of said driving current.

In another example preferable embodiment, said control system further comprises: a differential value determining module for determining a differential value which is calculated by subtracting an absolute value of an amplitude of said driving current from an absolute value of an amplitude of said primary alternating current; and/or a current control module for conducting a part of said primary alternating current to a power supply when the phase of said primary alternating current is substantially the same as the phase of said driving current and said differential value is greater than zero and/or compensating for the shortfall of current from said power supply when the phase of said primary alternating current is substantially the same as the phase of said driving current and said differential value is less than zero.
Further, the invention provides a computer program product comprising computer-implemented instructions which, when loaded and executed on a suitable system, can perform the steps of a method, as described above, wherein the computer program product is particularly embodied as a computer-readable storage medium, as a signal and/or as a data stream.

The above advantages and other advantages, and features of the present description will be readily apparent from the following Detailed Description when taken alone or in connection with the accompanying drawings.

### BRIEF DESCRIPTION OF THE DRAWINGS

Fig. 1 is a schematic configuration diagram of a hybrid electric vehicle according to an embodiment of the present description.

Fig. 2 is a circuit diagram showing details of AC bypass switches of the bypass circuit in Fig. 1.

Fig. 3 is a block diagram showing a control unit as the control system of the hybrid electric vehicle shown in Fig. 1.

Fig. 4 is a flowchart showing a control example by each module of the control unit according to this embodiment.

Fig. 5 is a flowchart showing the control example by each module of the control unit according to this embodiment.

Fig. 6 is an example of a timing chart on the basis of the control example of Figs. 4 and 5.

### DETAILED DESCRIPTION

Hereinafter, a preferable embodiment of the present description will be described with reference to the accompanying drawings.

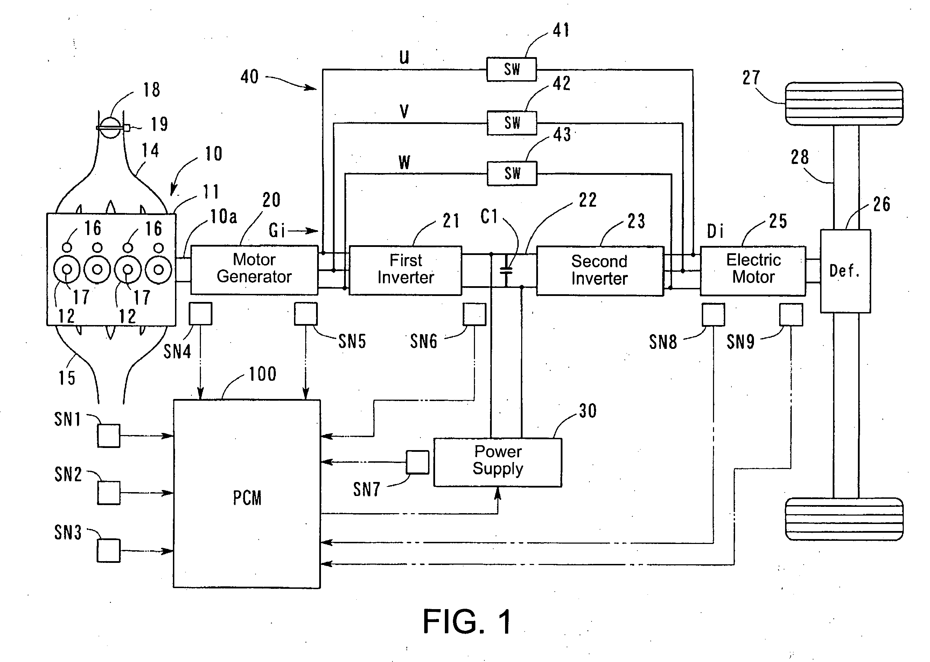

Fig. 1 is a schematic configuration diagram of a hybrid electric vehicle according to an embodiment of the present description.

The hybrid electric vehicle of the example embodiment is a series hybrid electric vehicle having an internal combustion engine 10 and generator 20 driven by the engine 10, referring to Fig. 1.

The engine 10 is, for example, a multi-cylinder four-cycle gasoline engine and includes a main body 11 of which a main part is composed of a cylinder head and a cylinder block, a plurality of rows of cylinders 12 formed in the main body 11, an intake manifold 14 to introduce fresh air into each cylinder 12, and an exhaust manifold 15 to exhaust burned gas of each cylinder 12. The main body 11 has a fuel injection valve 16 and a spark plug 17 attached, which are provided to correspond to each cylinder 12. The main body 11 is configured to drive a crankshaft 10a connected to a piston provided to each cylinder 12 by moving up and down the piston. The intake manifold 14 may have a throttle valve 18 for adjusting an amount of fresh air, and driven by an actuator 19 of the throttle body.

The generator 20 is a multiphase generator of three phases; for example, connected to the crankshaft 10a of the engine 10, configured to output alternating current driven by the engine 10, and preferably functions also as a motor to start the engine 10 by the supplied alternating current. The generator 20 is provided with a generator torque controller (not shown) and configured such that the generator 20 is controlled via the generator torque controller by a control unit 100 described later.

The generator 20 is connected to a first inverter 21. The first inverter 21 has a plurality of sets of elements corresponding to the number n of the phases of the generator 20. Each of the elements is composed of a transistor, a diode and the like. Here, the first inverter 21 converts the alternating current from the generator 20 into a direct current. An output terminal of the first inverter 21 is connected to a DC bus line 22. The DC bus line 22 is connected with a capacitor C1.

In this embodiment, the DC bus line 22 is connected with a second inverter 23 such that the first inverter 21, DC bus line 22 and second inverter 23 configure a three-phase first feed circuit.

The second inverter 23 has a plurality of sets of elements corresponding to the number of the phases of a polyphase motor 25 as a load. Each of the elements is composed of a transistor, a diode and the like. The second inverter 23 is connected to the motor 25 and configured to convert a direct current outputted from the first inverter 21 into an alternating current as a secondary current to distribute power to the motor 25. Note that in this embodiment, the first and second inverters 21 and 23 are an inverter/converter which can perform a bidirectional conversion, direct current into alternating current and alternating current into direct current.

The motor 25 connected to a differential mechanism 26 of the hybrid electric vehicle such that the motor 25 drives an axle 28 of the vehicle, preferably on a side of rear wheels 27 of the hybrid electric vehicle via the differential mechanism 26. The motor 25 is provided with a motor torque controller (not shown) and configured such that the motor 25 is controlled via the motor torque controller by the control unit 100 described later.

Further, the DC bus line 22 is connected with a power supply 30.

Next, a bypass circuit 40 is provided between the generator 20 and the motor 25 such that a second feed circuit is configured parallel with the first feed circuit.

The bypass circuit 40 is composed of AC bypass switches 41 to 43, each of which is provided to correspond to each of the phases (u phase, v phase, w phase) of the generator 20 and the like.

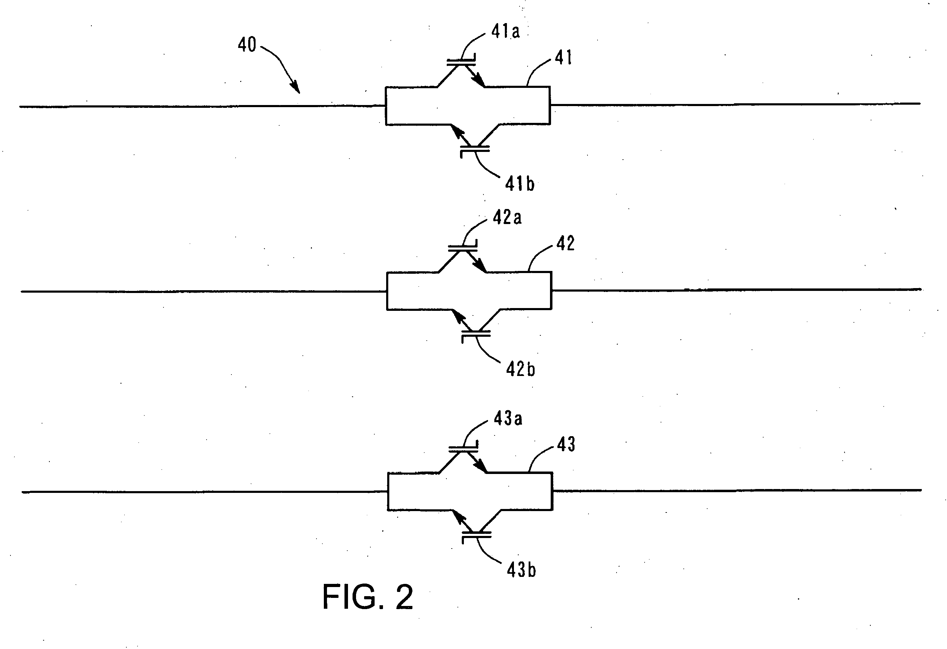

Fig. 2 is a circuit diagram showing details of the AC bypass switches 41 to 43 of the bypass circuit 40 in Fig. 1.

Referring to Fig. 2, each of the AC bypass switches 41 to 43 are embodied as semiconductor switches, each of which is composed of pairs of each of the forward direction transistors 41 a to 43a to control a current in a direction of flowing from the generator 20 to the motor 25 and each of opposite direction transistors 41 b to 43b to control a current in a direction of flowing from the motor 25 to the generator 20, respectively. Each of the transistors 41 a to 43a and 41 b to 43b are configured such that an ON/OFF operation thereof is controlled by the control unit 100 described in detail.

Referring to Fig. 1, the hybrid electric vehicle shown in Fig. 1 is controlled by a control unit (PCM: Powertrain Control Module) 100.

The control unit 100 is a microprocessor provided with a CPU (Central Processing Unit), a memory and the like to read a detected signal from an input component with a program module, execute a predetermined arithmetic processing, and output a control signal to an output component. Note that the control unit 100 may, represented as a unit in an illustrated example, be a module assembly formed by combining a plurality of units.

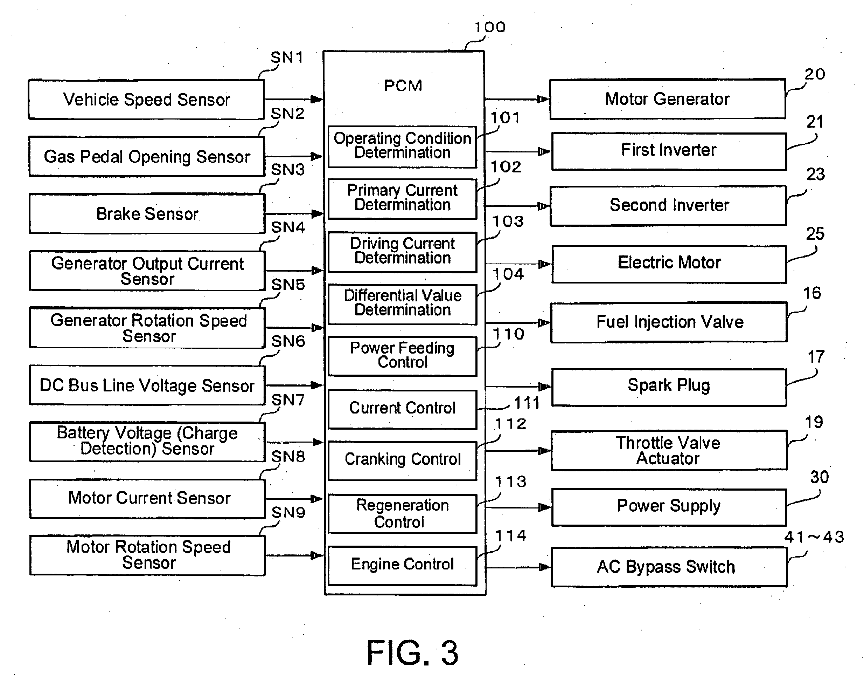

Fig. 3 is a block diagram showing the control unit 100 as a control system of the hybrid electric vehicle shown in Fig. 1.

Referring to Figs. 1 and 3, the input component of the control unit 100 includes a vehicle speed sensor SN1, gas-pedal opening or depressing sensor SN2 and brake sensor SN3 to determine an operating condition of the hybrid electric vehicle. Further, various sensors are provided to control the power distribution from the generator 20 to the motor 25.

The generator 20 is provided with a generator output current sensor SN4 to detect an output current thereof and a generator rotation speed sensor SN5 to detect rotation speeds thereof which are connected to the control unit 100, in order to detect a condition of the generator 20.

In order to control the power feed direction and feed/regeneration by the power supply 30, the DC bus line 22 is provided with a DC bus line voltage sensor SN6 to detect a voltage of the DC bus line 22, and the power supply 30 is provided with a battery voltage (charge detection) sensor SN7, the DC bus line and the power supply being connected to the control unit 100.

Further, in order to control the operating condition and the power feeding manner of the motor 25 per se, the motor 25 is provided with a motor current sensor SN8 and a motor rotation speed sensor SN9, which are connected to the control unit 100.

Examples of the output component of the control unit 100 includes the fuel injection valve 16, spark plug 17, throttle valve actuator 19, first and second inverters 21 and 23, and the AC bypass switches 41 to 43.

In the example shown, the control unit 100 logically includes an operating condition determining module 101, primary current determining module 102, driving current determining module 103, differential value determining module 104, power feeding control module 110, current control module 111, cranking control module 112, regeneration control module 113, and engine control module 114.

The operating condition determining module 101 is a logical module to determine the operating condition of the hybrid electric vehicle on the basis of each of the sensors SN1 to SN9. In this embodiment, the operating condition determining module 101 has the function to determine an operating point of the generator 20 as well, depending on the rotation speed and outputted current when the hybrid electric vehicle is driving.

The primary current determining module 102 is a logical module to determine the phase, amplitude and frequency of the alternating current generated by the generator 20 operated on the basis of a detected value of the generator output current sensor SN4.

The driving current determining module 103 is a logical module to determine the phase, amplitude and frequency of the alternating current necessary for the motor 25 to operate on the basis of the determination of the operating condition determining module 101; a control parameter based on a specification of the motor 25 and the like.

The differential value determining module 104 is a logical module to determine the differential value, which is calculated as a control parameter by subtracting an absolute value of amplitude of the driving current Di determined by the driving current determining module 103 from an absolute value of amplitude of the primary current Gi determined by the primary current determining module 102.

The power feeding control module 110 is a logical module to perform the power feeding control to operate the motor 25; specifically a control to determine selectively a supply source from the generator 20, power supply 30 and both thereof.

The current control module 111 is a logical module to control a current such that when electric power is supplied from the generator 20 to the motor 25 by the power feeding control module 110, a differential value is calculated, and when there is surplus current, the surplus current is conducted to the power supply 30, as well as when there is a shortfall of current; the shortfall of current is compensated for from the power supply 30 to the motor 25.

The cranking control module 112 is a logical module to control the engine 10 to start using the generator 20.

The regeneration control module 113 is a logical module to control the power supply 30 to drive when regenerating a battery.

The engine control module 114 is a logical module to control the fuel injection valve 16, spark plug 17, throttle valve actuator 19 and the like so as to control the rotation speed of the engine 10 to control the rotation speed of the generator 20.

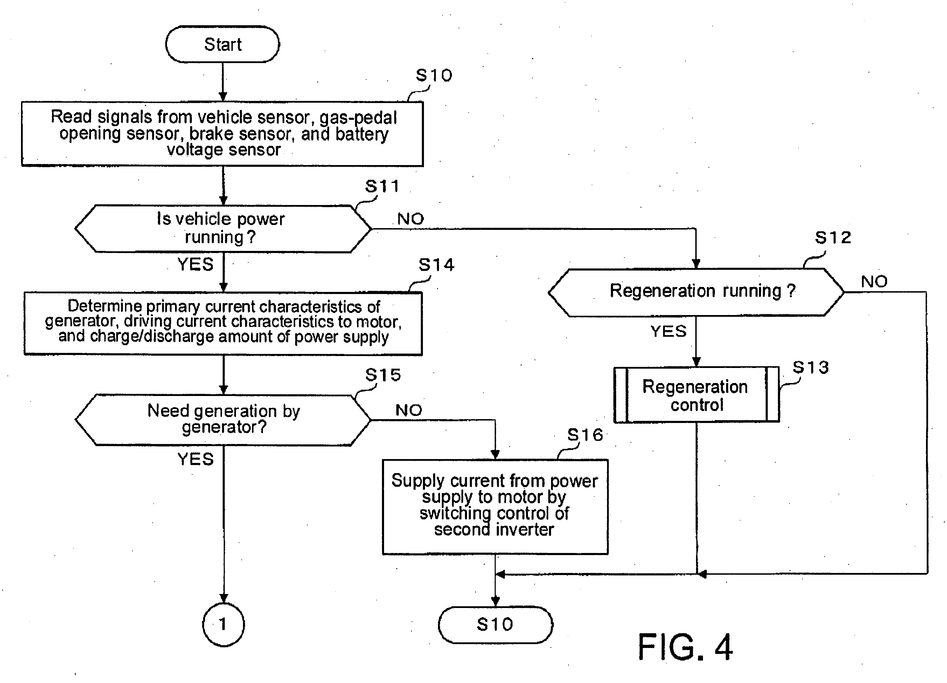

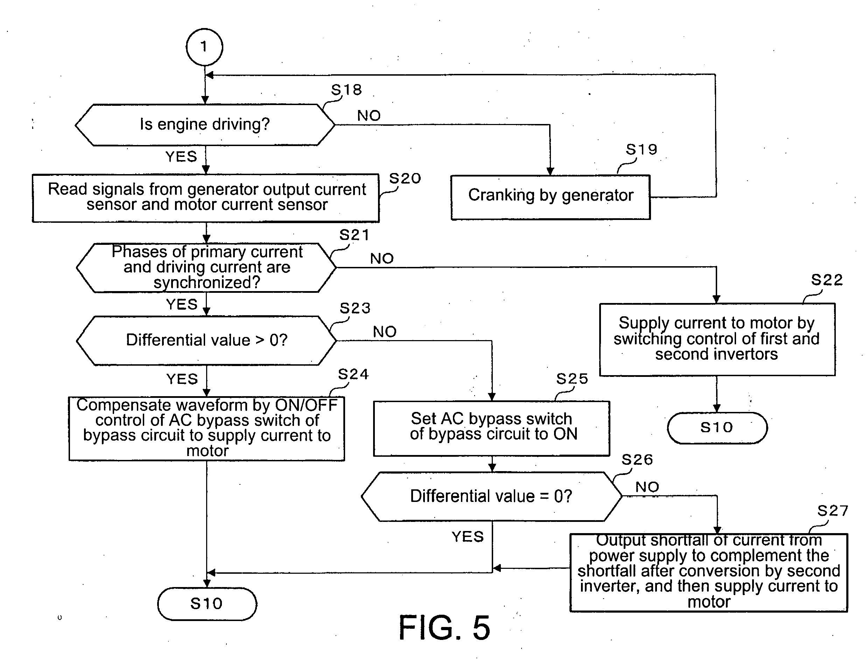

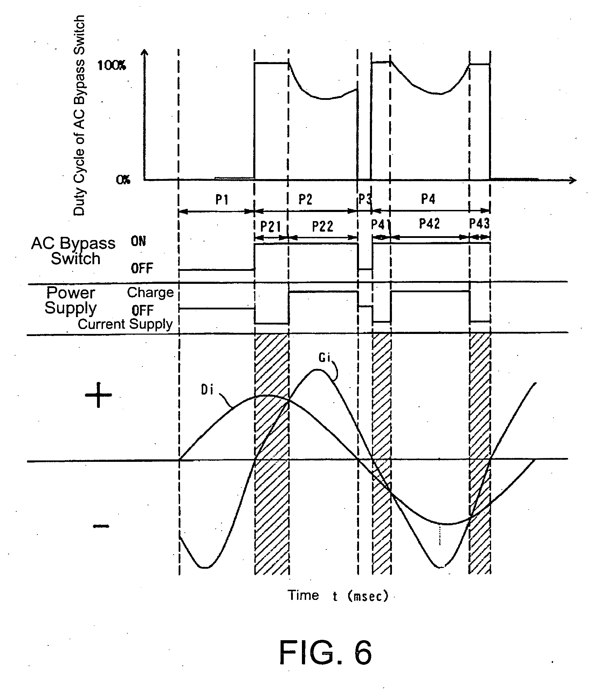

Figs. 4 and 5 are flowcharts showing a control example by each module of the control unit according to this embodiment. Fig. 6 is an example of a timing chart on the basis of the control example of Figs. 4 and 5.

Referring to Fig. 4, in this embodiment, the control unit 100 reads signals of various input components including the vehicle speed sensor SN1, gas pedal opening sensor SN2, brake sensor SN3, and battery voltage sensor SN7 to detect a vehicle operating condition (step S10).

The control unit 100 determines whether or not the hybrid electric vehicle is power running on the basis of the read signals of the input components (step S11).

If it is determined at step S11 that the hybrid electric vehicle is not power running, the control unit 100 further determines whether or not the hybrid electric vehicle is engaged in regeneration running (step S12), for example by determining whether the hybrid electric vehicle is stopping or in a battery regeneration running state. If it is engaged in regeneration running, the process returns to a regeneration control subroutine performed by the regeneration control module 113 to move to step S10 (step S13). Incidentally, the regeneration control subroutine itself can employ well-known control procedures, and the detailed description thereof is omitted. In step S12, if the vehicle is not engaged in the regeneration running (e.g., vehicle is not stopping, etc.), the process moves to step S10.

On the other hand, in step S11, if the vehicle is determined to be power running, the control unit 100 determines primary current characteristics of the generator 20, driving current characteristics of the motor 25, and the amount of discharge and charge of the power supply 30 are determined (step S14). As used herein, the term □gcurrent characteristic□h is a concept including a parameter of the amplitude, phase, and frequency of the relevant current.

The control unit 100 determines, after determining these current characteristics and the amount of discharge and charge, whether or not a current needs to be generated by the generator 20 (step S15). If the current need not be generated by the generator 20, the current of the power supply 30 is supplied to the motor 25 by the switching control with the second inverter 23 (step S16), and the process moves to step S10.

At step S15, the control unit 100 determines whether or not the engine 10 is driving in an operating range where the current needs to be generated by the generator 20. If the answer is yes, the routine proceeds to step S18, as shown in Fig. 5. If the engine 10 is not driving, the control unit 100 controls the generator 20 to function as a starter motor such that the generator 20 performs the cranking control of the engine 10 until the engine 10 is driven (step S19). The cranking operation is performed such that the current supplied to the first inverter 21 from the power supply 30 is conducted to the generator 20 by the switching control with the first inverter 21. When the engine 10 is driven, the control unit 100 reads out a detected value of the generator output current sensor SN4 and a detected value of the motor current sensor SN8 (step S20), and determines whether or not the phase of the primary current Gi of the generator 20 is synchronized with the phase of driving current Di of the motor 25 wherein the phases are determined based on the respective detected values (step S21). Here, synchronization of the phases means that the direction of the sign of the primary current Gi of the generator 20 is equal to the direction of the sign of the driving current Di of the motor 25 (see Fig. 6).

If the phases of the primary current Gi and the driving current Di are not on the same side (e.g., in a case of the phases P1, P3, etc. in Fig. 6), the control unit 100 converts the primary current Gi into a direct current with the switching control by the second inverters 21 and 23, and reconverts the direct current into an alternating current suitable to the driving current Di and then supplies the alternating current to the motor 25 (step S22) as is conventionally done, and the process moves to step S10.

On the other hand, if the phases of the primary current Gi and the driving current Di are on the same side (e.g., in a case of the phases P2, P4, etc. in Fig. 6), the control unit 100 calculates a differential value by subtracting an absolute value of amplitude of the driving current Di from an absolute value of amplitude of the primary current Gi, and determines whether or not the differential value is greater than zero (step S23). For example, in the example of Fig. 6, the absolute value of amplitude of the primary current Gi is larger than that of the driving current Di in the phases P22 and P42. In such phases P22 and P42, the AC bypass switches 41 to 43 of the bypass circuit 40 are subjected to an ON/OFF control (duty control), depending on the difference between the primary current Gi and the driving current Di such that the primary current Gi has the waveform (amplitude) thereof compensated and is supplied to the motor 25 (step S24), and the process moves to step S10. At the time of the ON/OFF control to the AC bypass switches 41 to 43 at step S24, the voltage of the DC bus line 22 is controlled to be low by use of a boosting/high-voltage converter provided to the power supply, which makes it possible for a part of the surplus current from the generator 20 to be charged to the power supply 30 having a power storage device such as a battery (see Fig. 6).

On the other hand, at step S23, if the differential value is zero, or negative (that is, an absolute value of amplitude of the driving current Di is larger than that of the primary current), the control unit 100 sets the AC bypass switches 41 to 43 of the bypass circuit 40 to ON (Duty=100%) (step S25), and then determines whether or not the differential value is zero (step S26). If the differential value is zero, the process moves to step S10 as it stands. If the differential value is negative (e.g., if the phase is P21, P41, P43, etc., in Fig. 6), the shortfall of current is outputted from the power supply 30 and converted to the second inverter 23 to supply to and compensate the motor 25 (step S27), and the process moves to step S10.

As described above, this embodiment includes a hybrid electric vehicle having the engine 10; the generator 20 driven by the engine to generate alternating primary current; the first feed circuit (the first inverter 21, DC bus line 22, and second inverter 23) to convert the primary current Gi into direct current and reconvert the direct current into alternating secondary current and then supply the secondary current to the motor 25 configured to drive the vehicle; the second feed circuit (e.g., bypass circuit 40) which is provided parallel with the first feed circuit such that the generator 20 is connected to the motor 25 directly and is able to modify a waveform of the primary current Gi generated by the generator 20; the AC bypass switches 41 to 43 as a semiconductor switch provided to the second feed circuit, and the control unit 100 as a control system for controlling power distribution of each feed circuit. The control unit 100 includes the operating condition determining module 101 for determining the vehicle operating condition; the primary current determining module 102 for determining at least a phase of the primary current Gi generated by the generator 20; the driving current determining module 103 for determining at least a phase of the driving current Di to be supplied to the motor 25 on the basis of the determination of the operating condition determining module 101; and the power feeding control module 110 for controlling power feeding such that at least part of the primary current Gi is supplied from the generator 20 to the motor 25 via the AC bypass switches 41 to 43 when the phase of the primary current Gi is the same as the phase of the driving current Di.

However, according to this embodiment, because the primary current Gi is supplied from the generator 20 to the motor 25 via the second feed circuit (e.g., bypass circuit 40) when the phase of the primary current Gi is the same as the phase of the driving current Di, the motor 25 can be driven by the generator 20 while a conversion loss can be decreased in comparison with operating current conversion two times by a converter/inverter, which can propel a vehicle with decreasing energy loss as much as possible.

Further, this embodiment includes the steps of determining a differential value (step S23), which is calculated by subtracting an absolute value of amplitude of the driving current Di from an absolute value of amplitude of the primary current Gi, and conducting a part of the current from the generator 20 to the power supply 30 when the phase of the primary current Gi is the same as the phase of the driving current Di and also when the differential value is greater than zero, and compensating for the shortfall of current from the power supply 30 when the phase of the primary current Gi is the same as the phase of the driving current Di and also when the differential value is less than zero. For this reason, in this embodiment, when the primary current Gi generated by the generator 20 is larger than the driving current Di, the power supply 30 is charged by conducting surplus current to the power supply 30 and the surplus current can be regenerated efficiently. On the contrary, when the primary current Gi generated by the generator 20 is less than the driving current Di, optimum driving current Di can be ensured by supplying a shortfall of current from the power supply 30. Also, when there is surplus current, it may be stored in the power supply 30, and then stored current will be supplied to the motor 25 from the power supply 30 only when the differential value, which is calculated by subtracting an absolute value of amplitude of the driving current Di from an absolute value of amplitude of the primary current Gi, becomes a negative value, which makes it possible to attempt to save current or power or energy from the power supply 30.

This embodiment described above only exemplifies a preferable embodiment of the present description; the present description is not limited to the example embodiment described above.
The invention further relates to a hybrid electric vehicle and a method for controlling a hybrid electric vehicle which may include determining a vehicle operating condition of a hybrid electric vehicle, determining at least a phase of a primary alternating current, determining at least a phase of a driving current to be supplied to a motor of the hybrid electric vehicle on the basis of said operating condition, determining whether or not a phase of said primary alternating current is substantially the same as a phase of a driving current, and supplying at least part of said primary alternating current from a generator to the motor via a second feed circuit when the phase of said primary alternating current is substantially the same as the phase of said driving current.

For example, a feeding step (step S24 to S27) may be a step where all the primary current Gi is supplied from the generator 20 to the motor 25 via the second feed circuit (e.g., bypass circuit 40) when the phase of the primary current Gi is substantially the same as the phase of the driving current Di. Such a case can enhance the operating rate of the second feed circuit and drive the motor 25 by alternating current from the generator 20 with further decreased conversion loss, which can propel a vehicle with decreasing energy loss as much as possible.

In another embodiment, a diode rectifier may be provided in place of the first inverter 21 shown in Figs. 1 and 3.

The bypass circuit 40 may employ various converter circuits which can modify a waveform of the primary current Gi, and may be composed of a matrix converter which has a bidirectional ON/OFF switch and includes a filter circuit on the input side, for example.

In the flowchart of Fig. 5, as the input component for determining the phase, the rotation speed sensors SN5 and SN9 may be employed in place of the current sensors SN4 and SN8, respectively at step S20. Alternatively, the current sensors SN4 and SN8 as well as the rotation speed sensors SN5 and SN9 may be used to perform the determination control.

It may be appreciated that various modifications can be made in the scope of the claims of the present description.

It should be understood that the embodiments herein are illustrative and not restrictive, since the scope of the invention is defined by the appended claims rather than by the description preceding them, and all changes that fall within metes and bounds of the claims, or equivalence of such metes and bounds thereof are therefore intended to be embraced by the claims.

## Claims

1. A method for controlling a hybrid electric vehicle having a generator (20) driven by an engine (10) to generate primary alternating current, a motor (25) configured to provide a drive force to propel the vehicle, a first feed circuit (21, 22, 23) to convert said primary alternating current into direct current and reconvert said direct current into secondary alternating current and then supply said secondary alternating current to said motor (25), and a second feed circuit (40) which is provided in parallel with said first feed circuit (21, 22, 23), the method comprising the steps of:
determining a vehicle operating condition;
determining at least a phase of said primary alternating current;
determining at least a phase of a driving current to be supplied to said motor (25) on the basis of said vehicle operating condition;
determining whether a phase of said primary alternating current is substantially the same as a phase of said driving current or not; and
supplying at least part of said primary alternating current from said generator (20) to said motor (25) via said second feed circuit (40) when the phase of said primary alternating current is substantially the same as the phase of said driving current.

2. The method for controlling a hybrid electric vehicle according to claim 1,
wherein the second feed circuit (40) can conduct said primary alternating current to said motor (25) directly and/or is able to modify a waveform of said primary alternating current.

3. The method for controlling a hybrid electric vehicle according to claim 1 or 2,
wherein all of said primary alternating current from said generator (20) is supplied to said motor (25) via said second feed circuit (40) when the phase of said primary alternating current is substantially the same as the phase of said driving current.

4. The method for controlling a hybrid electric vehicle according to any one or more of the preceding claims, further comprising the steps of:
determining a differential value which is calculated by subtracting an absolute value of an amplitude of said driving current from an absolute value of an amplitude of said primary alternating current; and/or
conducting a part of said primary alternating current to a power supply (30) when the phase of said primary alternating current is substantially the same as the phase of said driving current and said differential value is greater than zero; and/or
compensating for a shortfall of current from said power supply (30) when the phase of said primary alternating current is substantially the same as the phase of said driving current and said differential value is less than zero.

5. A hybrid electric vehicle having an internal combustion engine (10), a generator (20) driven by said engine (10) to generate a primary alternating current, a motor (25) configured to provide a drive force to propel the vehicle, a first feed circuit (21, 22, 23) to convert said primary alternating current into a direct current and reconvert said direct current into a secondary alternating current and then supply said secondary alternating current to said motor (25), a second feed circuit (40) which is provided parallel with said first feed circuit (21, 22, 23), and a control system (100) for controlling power distribution of each feed circuit (21, 22, 23, 40), said control system (100) comprising:
an operating condition determining module (101) for determining a vehicle operating condition;
a primary current phase determining module (102) for determining at least a phase of said primary alternating current;
a driving current determining module (103) for determining at least a phase of a driving current to be supplied to said motor (25) on the basis of said vehicle operating condition; and
a power feeding control module (110) for supplying at least part of said primary alternating current from said generator (20) to said motor (25) via said second feed circuit (40) when the phase of said primary alternating current is substantially the same as the phase of said driving current.

6. The hybrid electric vehicle according to claim 5,
wherein the second feed circuit (40) is configured to conduct said primary alternating current to said motor (25) directly and/or to modify a waveform of said primary alternating current via a semiconducting switch (41, 42, 43) provided in said second feed circuit (40).

7. The hybrid electric vehicle according to claim 5 or 6,
wherein said power feeding control module(110) supplies all of said primary alternating current from said generator (20) to said motor (25) via said second feed circuit (40) when the phase of said primary alternating current is substantially the same as the phase of said driving current.

8. The hybrid electric vehicle according to any one or more of the preceding claims 5 to 6, said control system further comprising:
a differential value determining module (104) for determining a differential value which is calculated by subtracting an absolute value of an amplitude of said driving current from an absolute value of an amplitude of said primary alternating current; and/or
a current control module (111) for conducting a part of said primary alternating current to a power supply (30) when the phase of said primary alternating current is substantially the same as the phase of said driving current and said differential value is greater than zero and compensating for a shortfall of current from said power supply (30) when the phase of said primary alternating current is substantially the same as the phase of said driving current and said differential value is less than zero.

9. Computer program product comprising computer-implemented instructions which, when loaded and executed on a suitable system, can perform the steps of a method of any one of the preceding claims 1 to 4.
